(19) Europäisches Patentamt
European Patent Office
Office européen des brevets

(11) **EP 3 403 496 B1**

(12) **EUROPÄISCHE PATENTSCHRIFT**

(45) Veröffentlichungstag und Bekanntmachung des Hinweises auf die Patenterteilung:
**29.06.2022  Patentblatt 2022/26**

(21) Anmeldenummer: **18401042.9**

(22) Anmeldetag: **18.04.2018**

(51) Internationale Patentklassifikation (IPC):
**A01M 7/00** *(2006.01)*

(52) Gemeinsame Patentklassifikation (CPC):
**A01M 7/0089**

(54) **VERFAHREN ZUR ERMITTLUNG EINER BENÖTIGTEN AUFWANDMENGE FÜR LANDWIRTSCHAFTLICHES GUT**

METHOD FOR THE DETERMINATION OF THE REQUIRED APPLICATION RATE FOR AGRICULTURAL MATERIAL

PROCÉDÉ DE DÉTERMINATION D'UNE DOSE D'APPLICATION REQUISE POUR UN PRODUIT AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2017  DE 102017110209**

(43) Veröffentlichungstag der Anmeldung:
**21.11.2018  Patentblatt 2018/47**

(73) Patentinhaber: **Amazonen-Werke H. Dreyer SE & Co. KG**
**49205 Hasbergen (DE)**

(72) Erfinder:
• **Sia, Tim-Randy**
**49179 Ostercappeln (DE)**
• **Klemann, Timo**
**49191 Belm (DE)**

(56) Entgegenhaltungen:
**EP-A1- 2 921 050    DE-A1- 10 247 490**

**Beschreibung**

Die Erfindung betrifft ein Verfahren zur Ermittlung einer benötigten Aufwandmenge für landwirtschaftliches Gut.

In der Landtechnik ist eine zunehmende Tendenz zur Präzisierung von Bearbeitungsvorgängen, insbesondere bei Verteilmaschinen, beobachtbar. Gründe hierfür sind die Optimierung der erzielbaren Ernteerträge, die Reduktion von Kosten, insbesondere für Saatgut, Spritz- und Düngemittel und die zunehmende Sensibilisierung bezüglich möglicher Umweltbelastungen durch landwirtschaftliche Produkte. Aus den genannten Gründen ist in der Vergangenheit vorgeschlagen worden, landwirtschaftliche Produkte nicht mit einer konstanten Ausbringmenge pro Fläche auf der landwirtschaftlichen Fläche zu verteilen, sondern teilflächenspezifische Ausbringmengen zu definieren und in einer sogenannten Applikationskarte zu hinterlegen. Diese teilflächenspezifischen Ausbringmengen entsprechen dem für den entsprechenden Bereich der landwirtschaftlichen Fläche ermittelten Bedarf an landwirtschaftlichem Produkt. So kann es beispielsweise bei Düngemitteln je nach Bodenbeschaffenheit und Historie der landwirtschaftlichen Fläche zur Optimierung der Erträge sinnvoll sein verschiedene Ausbringmengen von Dünger pro Fläche an verschiedenen Orten der Fläche auszubringen. Auch kann es bei Pflanzenschutzmitteln sinnvoll sein in Abhängigkeit des Krankheitsdrucks an verschiedenen Orten der Fläche unterschiedliche Mengen des auszubringenden Pflanzenschutzmittels zu applizieren. Die benötigten Mengen können vorab aus aktuellen Messwerten, welche beispielsweise mittels spektraler Analyse der auf der landwirtschaftlichen Fläche wachsenden Pflanzen gewonnen werden, und/oder aus historischen Messdaten, beispielsweise ortsaufgelösten Ernteertragsdaten, und/oder aus zuvor verwendeten Applikationskarten ermittelt werden. Weitere Daten, wie beispielsweise Daten über die Bodenbeschaffenheit, können verwendet werden. Ein Verfahren zur Erstellung einer derartigen Applikationskarte wird in der DE102004055217A1 beschrieben, eine Anwendung einer solchen Applikationskarte zur Einstellung eines Düngerstreuers bei der Bearbeitung einer landwirtschaftlichen Fläche ist beispielsweise durch die FR2882498A1 offenbart.

Problematisch ist jedoch, dass die Bestimmung der für die Bearbeitung der landwirtschaftlichen Fläche notwendigen Aufwandmenge durch die Verwendung derartiger Applikationskarten und die hierdurch bedingte kleinteilige Einstellung verschiedener Ausbringmengen und damit der benötigten Befüllmenge der Vorratsbehälter der landwirtschaftlichen Verteilmaschine immens erschwert wird. Die für die Bearbeitung notwendige Aufwandmenge und Befüllmenge des Vorratsbehälters an landwirtschaftlichem Produkt kann somit lediglich abgeschätzt werden. Dies führt regelmäßig dazu, dass die auszubringende Menge zu gering eingeschätzt und somit ein oder mehrere zusätzliche Befüllvorgänge durchgeführt werden muss, oder dass nach dem Ausbringvorgang übriggebliebenes Produkt umständlich aus dem Vorratsbehälter entfernt werden muss.

Besonders kritisch ist dies bei Pflanzenschutzspritzen, da dort das Produkt vor dem Ausbringvorgang typischerweise mit Wasser verdünnt wird. Da die Verdünnungsfaktoren bei Pflanzenschutzmitteln in der Regel sehr hoch sind, kann ein falsches Einschätzen der benötigten Aufwandmenge dazu führen, dass sehr große Mengen an angemischtem, verdünntem Pflanzenschutzmittel übrig bleiben. Wird beispielsweise bei einer auszubringenden Menge von 9000 l Pflanzenschutzmittel der Bedarf nur um 5 % zu hoch eingeschätzt, bedeutet dies, dass 450 l übrig bleiben. Demgegenüber kann die Menge an konzentriertem Pflanzenschutzmittel, welche in der gesamten Wassermenge verdünnt wird, lediglich wenige Liter betragen. Der Landwirt steht nun also vor dem Problem die übrig gebliebenen 450 l zu lagern oder zu entsorgen. Da beides sehr aufwendig bzw. kostenintensiv ist, wird oftmals die übrig gebliebene Menge an Spritzmittel zusätzlich auf der zu bearbeitenden Fläche ausgebracht, was eine unnötige Umweltbelastung bedeutet.

Die EP2057877B1 daher vor, bei der Bearbeitung der landwirtschaftlichen Fläche fortlaufend die Restmenge an Pflanzenschutzmittel in einem Vorratsbehälter zu messen und mit der noch zu bearbeitenden Restmenge zu vergleichen. Die momentane Ausbringmenge wird nun derart laufend an die Messwerte der Restmenge und der noch zu bearbeitenden Fläche angepasst, dass bei vollständiger Bearbeitung der landwirtschaftlichen Fläche auch der Vorratsbehälter zumindest annähernd vollständig entleert ist. Der offensichtliche Nachteil an dem beschriebenen Verfahren ist, dass das grundsätzliche Problem, nämlich die fehlerhafte Ermittlung des Bedarfs an Pflanzenschutzmittel für die bearbeitete Fläche nicht gelöst wird. Stattdessen wird eine fehlerhaft ermittelte Menge an Pflanzenschutzmitteln derart vorausschauend ausgebracht, dass die Fehlbehandlung einzelner Pflanzen möglichst gering ausfällt. Es wird hierdurch jedoch nicht ermöglicht, die benötigte Menge an Pflanzenschutzmittel im Voraus möglichst präzise zu bestimmen.

Ein alternatives Verfahren zum Ausbringen von Pflanzenschutzmittel auf ein landwirtschaftliches Feld mit einer einem Fahrzeug zugeordneten Spritzeinrichtung wird in der EP2921050A1 beschrieben.

Aufgabe der vorliegenden Erfindung ist es ein Verfahren bereitzustellen, um die Nachteile des Standes der Technik zu beheben und insbesondere die für einen Ausbringvorgang anhand einer Applikationskarte benötigte Menge an landwirtschaftlichem Produkt vorherzusagen.

Diese Aufgabe wird gelöst durch den Verfahrensanspruchs 1. Demgemäß ist vorgesehen ein mehrschrittiges Verfahren durchzuführen, welches Verfahren umfasst:

- Erstellen eines virtuellen Modells der Verteilmaschine mit einer Anzahl an Teilbreiten, wobei das Modell die Position der Teilbreiten innerhalb der Arbeitsbreite (AB) umfasst,

- Bewegen eines virtuellen Modells der Verteilmaschine entlang des Fahrspursystems auf einem Modell der landwirtschaftlichen Fläche oder Teilfläche,
- In festgelegter Schrittweite wiederholtes Berechnen der Teilaufwandmenge, welche zur Erreichung der sich aus der Applikationskarte am jeweiligen Ort des Modells der Verteilmaschine und/oder deren Teilbreiten ergebenden Sollausbringmenge benötigt wird und
- Aufsummieren der Teilaufwandmengen zur Ermittlung der benötigten Aufwandmenge bis die landwirtschaftliche Fläche zumindest annähernd vollständig virtuell bearbeitet wurde.

Es ist also zunächst vorgesehen, ein Modell der Verteilmaschine zu erstellen. Dieses Modell kann unter anderem die Arbeitsbreite der Verteilmaschine und die Information der Lage der Arbeitsbreite bzw. des Arbeitsbereiches relativ zum Fahrwerk der Verteilmaschine oder des die Verteilmaschine tragenden Schleppers umfassen. Ist letztere Information nicht vorhanden, kann vorgesehen sein anzunehmen, dass die Arbeitsbreite symmetrisch zum Fahrwerk der Verteilmaschine angeordnet ist, wie dies in aller Regel der Fall ist. Die Arbeitsbreite ist hierbei der durch die Verteilmaschine abgedeckte Arbeitsbereich der Verteilmaschine. Dies kann bei einem Düngerstreuer die Streufächerbreite, bei einer Pflanzenschutzspritze im Wesentlichen die Gestängebreite und bei einer Sämaschine der Abstand der äußersten Säaggregate sein. Die Arbeitsbreite einer Verteilmaschine kann variabel sein, beispielsweise kann der Streufächer je nach Einstellung eines Schleuderstreuers variieren oder äußere Spritzdüsen einer Pflanzenschutzspritze abgeschaltet sein. Die Arbeitsbreite kann durch das für die Bearbeitung der landwirtschaftlichen Fläche bereitgestellte Fahrspursystem definiert und vorgegeben sein. So kann beispielsweise ein und derselbe Schleuderstreuer durch die Anpassung der Arbeitsparameter verschiedene Flächen mit verschiedenen Fahrspursystemen bearbeiten.

Das Fahrwerk der Verteilmaschine kann bei einer gezogenen Maschine an der Verteilmaschine selbst angeordnet oder bei einer getragenen Maschine an einem die Verteilmaschine ziehenden Schlepper angeordnet sein. Das Fahrwerk wird entlang des Fahrspursystems bewegt. Somit ist die Arbeitsbreite wie oben erwähnt typischerweise und in aller Regel symmetrisch zum Fahrwerk und damit zu der jeweils gerade befahrenen Fahrspur angeordnet. In Einzelfällen, insbesondere in Randbereichen der landwirtschaftlichen Fläche kann jedoch auch eine asymmetrische Anordnung der Arbeitsbreite zur gerade befahrenen Fahrspur vorgesehen sein. Auch kann in diesen Fällen eine andere Arbeitsbreite vorgesehen sein, als bei der Bearbeitung im Zentrum der landwirtschaftlichen Fläche. Die Arbeitsbreite ist in der Regel gegeben durch die Hälfte des Abstands zwischen der gerade befahrenen Fahrspur und der hiervon rechten Fahrspur addiert zu der Hälfte des Abstands zwischen der gerade befahrenen Fahrspur und der hiervon linken Fahrspur. Bei der Bearbeitung in der Nähe der Feldgrenze kann entsprechend einer der beiden Werte durch den Abstand zur Feldgrenze ersetzt werden.

Erfindungsgemäß berücksichtigt das Modell die Position der Teilbreiten innerhalb der Arbeitsbreite. Eine Teilbreite meint hierbei einen Bereich der Arbeitsbreite dessen Ausbringmenge absolut und/oder im Verhältnis zu der Ausbringmenge der anderen Teilbreiten anpassbar ist. Anpassbar meint hierbei, dass die ausgebrachte Menge kontinuierlich oder schrittweise angepasst werden kann, wobei bei mehr als einer Teilbreite innerhalb der Arbeitsbreite zumindest zwei unterschiedliche und von 0 verschiedene Ausbringmengen einstellbar sind. Eine Teilbreite kann beispielsweise einen Bereich eines Streufächers eines Schleuderstreuers oder eine einzelne oder eine Gruppe von Spritzdüsen einer Feldspritze oder ein oder mehrere Säaggregate einer Sämaschien sein. Ein absolutes Anpassen der Ausbringmenge kann hierbei, wie bei einer Feldspritze oder einer Sämaschine, bedeuten, dass die Ausbringmenge einer Teilbreite durch Regelung einzelner Düsen oder Säaggregate vollkommen unabhängig steuerbar ist, während ein Anpassen im Verhältnis zur Ausbringmenge der anderen Teilbreiten bedeuten kann, dass die Ausbringmenge einer Teilbreite nur in Grenzen und in Abhängigkeit anderer Teilbreiten, wie bei einem Schleuderstreuer, regelbar ist. Die Position einer jeden Teilbreite bzw. des Zentrums jeder Teilbreite im Verhältnis zu anderen Teilbreiten ist bekannt.

Es wird nun das virtuelle Modell der Verteilmaschine entlang eines Fahrspursystems der landwirtschaftlichen Fläche bewegt. Dieses Fahrspursystem wird üblicherweise während des Sävorganges auf der landwirtschaftlichen Fläche angelegt und kann hierdurch definiert und gespeichert sein. Es kann auch im Vorfeld des Sävorganges geplant sein oder durch ein zuvor angelegtes Fahrspursystem, welches beispielsweise ein oder mehrere Jahre zuvor verwendet wurde, vorgegeben sein. Das Fahrspursystem kann beispielsweise zusammen mit einer zu verwendenden Applikationskarte oder aber getrennt von dieser digital bereitgestellt werden. Typischerweise wird das virtuelle Modell nun derart entlang dieses Fahrspursystems bewegt, dass die Arbeitsbreite sich in gleichen Teilen zu beiden Seiten der Fahrspur erstreckt, typischerweise bis zu dem halben Abstand zur benachbarten Fahrspur. Dies bedeutet beispielsweise, dass bei einem Fahrspurabstand von 24m ein Spritzgestänge mit 24m Breite sich 12m von der Mitte der gerade befahrenen Fahrspur zu beiden Seiten erstreckt. Bei einem Schleuderstreuer wird typischerweise überlappend gearbeitet. Die Arbeitsbereiche des Schleuderstreuers bei der Fahrt auf benachbarten Fahrspuren überlappen sich also, um eine möglichst gleichmäßige Verteilung des Streugutes auf der Fläche zu erreichen. Somit entspricht bei einem Schleuderstreuer die Arbeitsbreite in der Regel nicht der Streufächerbreite bzw. dem Verteilbereich des Streugutes. Typischerweise entspricht die Arbeitsbreite ungefähr der halben Streufächerbreite.

In einer Weiterbildung der Erfindung kann vorgesehen sein, dass das Verfahren durchgeführt wird unter Verwendung der Information über eine vom Fahrspurabstand abweichende Arbeitsbreite, der landwirtschaftlichen Verteilmaschine. Wird beispielsweise gerade die Fahrspur befahren, welche direkt neben der Feldgrenze ist, kann dies bedeuten, dass das Spritzgestänge sich 12m vom Zentrum der gerade befahrenen Fahrspur zu der der Feldgrenze abgewandten Seite erstreckt, und sich das Spritzgestänge auf der der Feldgrenze zugewandten Seite zwar über die Feldgrenze hinaus erstreckt, beispielsweise wenn die Feldgrenze 9m vom Zentrum der Fahrspur entfernt ist, jedoch nur 9m auf dieser Seite der Fahrspur effektiv zur Arbeitsbreite beitragen, da die äußersten Düsen, welche über die Feldgrenze hinausragen oder einen bestimmten Mindestabstand zur Feldgrenze unterschreiten, abgeschaltet sein müssen. Die Arbeitsbreite kann also in Abhängigkeit des Fahrspurabstands und/oder der Position einer Feldgrenze auch während eines Bearbeitungsvorganges anpassbar sein. Dies kann beispielsweise durch Abschalten einzelner Düsen oder Säaggregate oder Anpassung des Streufächers eines Schleuderstreuers realisiert werden. Das Abschalten dieser Aggregate kann, muss aber nicht zwingend das Vorhandensein entsprechender Teilbreiten umfassen. Beispielsweise können bei einem Spritzgestänge einzelne Düsen oder bei einer Sämaschine einzelne Säaggregate abschaltbar sein, ohne dass die Menge an auszubringendem Gut für die abgeschalteten Düsen oder Säaggregate absolut oder relativ zu den anderen Düsen oder Aggregaten einstellbar ist.

Für jede Position des virtuellen Modells auf der landwirtschaftlichen Fläche wird nun die Teilaufwandmenge berechnet, welche erforderlich ist, um die in diesem Bereich der landwirtschaftlichen Fläche auszubringende Sollausbringmenge zu erreichen. Die Teilaufwandmenge setzt sich hierbei additiv zusammen aus den Teilaufwandmengen für jede Teilbreite. Die Teilaufwandmenge für jede Teilbreite ist diejenige Aufwandmenge, welche in der Applikationskarte am Ort des Zentrums der jeweiligen Teilbreite angegeben ist. Verfügt die Verteilmaschine lediglich über eine einzige Teilbreite, können also mit anderen Worten nicht verschiedene Ausbringmengen innerhalb der Arbeitsbreite eingestellt werden, so ist der maßgebliche Ort für die Ermittlung der Teilaufwandmenge aus der Applikationskarte üblicherweise das Zentrum der Arbeitsbreite, alternativ kann auch die gerade eingenommene Position innerhalb der Fahrspur betrachtet werden. Die Teilaufwandmenge ist zudem abhängig von der Schrittweite. Diese kann in einer vorteilhaften Weiterbildung eine zwischen zwei Berechnungen durch das virtuelle Modell der Verteilmaschine zurückzulegende Strecke entlang des Fahrspursystems oder eine zwischen zwei Berechnungen abzuwartende Zeit bei einer festgelegten Geschwindigkeit des virtuellen Modells der Verteilmaschine entlang des Fahrspursystems berücksichtigen. Da die Berechnung der Aufwandmenge in diskreten Schritten mit festgelegter Schrittweite, beispielsweise alle 10m, durchgeführt wird, wird also nur in festgelegten Schritten von jeweils 10m die auszubringende Menge an landwirtschaftlichem Gut neu berechnet. Hierfür wird das Modell dann 10m in Fahrtrichtung entlang der Fahrspur vorwärtsbewegt und die Berechnung erneut durchgeführt. Die Teilaufwandmenge muss also jeweils in einem Bereich, beispielsweise 5m in Fahrtrichtung und entgegen der Fahrtrichtung, ermittelt werden, um eine vollständige Bearbeitung der landwirtschaftlichen Fläche zu simulieren.

Beispielsweise kann an einer aktuellen Position des Modells in einer Fahrspur vorgesehen sein, dass 2/3 der Arbeitsbreite einer landwirtschaftlichen Verteilmaschine sich in einem Bereich befinden, der mit einer Sollausbringmenge von 150 kg/ha eines landwirtschaftlichen Produktes beaufschlagt werden soll, während 1/3 sich in einem Bereich befinden, der mit einer Sollausbringmenge von 100 kg/ha beaufschlagt werden soll. Die Sollausbringmenge bezeichnet also jeweils die gewünschte Menge an landwirtschaftlichem Produkt, welches pro Fläche ausgebracht werden soll. Für das obige Beispiel ist nun zur Ermittlung der Teilausbringmenge am aktuellen Ort für eine Arbeitsbreite von 24m, eine entsprechende Anzahl an Teilbreiten, beispielsweise 12 Teilbreiten mit einer Breite von jeweils 2m und eine Schrittweite von 10m folgende Berechnung zur Ermittlung der entsprechenden Teilausbringmenge TA anzustellen:

$$TA= 2m*10m*1/10000*(150 \text{ kg/ha}*8 + 100\text{kg/ha}*4) = 3{,}2 \text{ kg}$$

Es müssen also in dem betrachteten Bereich der landwirtschaftlichen Fläche von 10m * 24m entsprechend der verwendeten Applikationskarte 3,2 kg des zu verteilenden landwirtschaftlichen Guts ausgebracht werden.

Das Modell der Verteilmaschine wird nun in 10m Schritten entlang der Fahrspuren der landwirtschaftlichen bewegt und jeweils entsprechend der in der Applikationskarte hinterlegten Sollausbringmenge an den Orten der Teilbreiten die Teilaufwandmenge TA ermittelt.

Wird das Modell kontinuierlich oder quasiikontinuierlich mit einer bestimmten Geschwindigkeit entlang der landwirtschaftlichen Fläche bewegt, so kann der Schritt auch eine Zeitangabe umfassen, welche typischerweise geschwindigkeitsabhängig ist. Wird beispielsweise das Modell mit 18 km/h oder 5m/s bewegt, so könnte eine Schrittweite beispielsweise 5m/s * 2s =10m sein.

Ist nun die Fläche zumindest annähernd komplett virtuell bearbeitet, also jeder Ort der landwirtschaftlichen Fläche in dem Modell mit landwirtschaftlichem Produkt beaufschlagt, so kann aus der Summe der einzelnen Teilaufwandmengen die insgesamt benötigte Aufwandmenge an landwirtschaftlichem Produkt ermittelt werden. Eine annähernd komplette Bearbeitung ist beispielsweise gegeben, wenn die gesamte Fläche bis auf kleinere Bereiche der landwirtschaftlichen Fläche, welche beispielsweise wegen der diskreten Breite der Teilbreiten und/oder der unregelmäßigen Form der Begrenzung der landwirtschaftlichen Fläche und/oder ungünstig angelegter Fahrspuren nicht bearbeitbar sind, in dem Modell vollständig bearbeitet wurde.

Mittels des beschriebenen Verfahrens lässt sich für eine landwirtschaftliche Verteilmaschine, deren Anzahl und Position von Teilbreiten bekannt ist und für eine zu bearbeitende landwirtschaftliche Fläche, für die eine Applikationskarte und ein Fahrspursystem bekannt ist, äußerste präzise die benötigte Aufwandmenge an landwirtschaftlichem Gut, beispielsweise in kg oder l, ermitteln. Die Genauigkeit des Verfahrens kann hierbei durch geeignete Wahl der Schrittweite je nach Bedarf erhöht bzw. die Rechenintensität gesenkt werden.

Das Berücksichtigen des Fahrspursystems der landwirtschaftlichen Fläche ist deswegen von großer Bedeutung, weil je nach Position der jeweiligen Fahrspur die am jeweiligen Ort auszubringende Teilaufwandmenge sehr unterschiedlich sein kann. Verfügt beispielsweise ein Spritzgestänge mit einer Arbeitsbreite von 24m nur über eine einzige Teilbreite ist also mit anderen Worten die Ausbringmenge nur für die komplette Arbeitsbreite veränderbar und nicht für Teilbereiche anpassbar und wird daher immer lediglich das Zentrum der Arbeitsbreite bei der Bestimmung der auszubringenden Menge an Pflanzenschutzmittel betrachtet, so kann sich die Teilaufwandmenge an Spritzbrühe beispielsweise im folgenden Fall um einen Faktor 2 unterscheiden: Die Applikationskarte weist im Bereich der aktuellen Position der Arbeitsbreite zwei Zonen mit unterschiedlichen Sollausbringmengen auf, wobei die Sollausbringmengen sich um einen Faktor 2 unterscheiden. Hierbei deckt die erste Zone 11m des Spritzgestänges ausgehende von dessen linkem Ende her ab, während die zweite Zone 13m des Spritzgestänges von dessen rechtem Ende her abdeckt. Das Zentrum der Arbeitsbreite und damit die für die Berechnung der Teilaufwandmenge maßgebliche Position liegen also in der zweiten Zone. Wäre die Fahrspur allerdings 2m weitere links platziert, so wäre das Zentrum der Arbeitsbreite in der ersten Zone platziert, so dass die Ausbringmenge und damit die für diesen Bereich maßgebliche Teilaufwandmenge um einen Faktor 2 angepasst wäre.

Das vorliegende Verfahren erlaubt es also, sehr präzise die für die Bearbeitung einer landwirtschaftlichen Fläche mittels einer Applikationskarte insgesamt benötigte Aufwandmenge an landwirtschaftlichem Gut zu berechnen. Hierbei wird die Applikationskarte, das Fahrspursystem und die Arbeitsbreite bzw. vorhandene Teilarbeitsbreiten und deren relative Position zueinander berücksichtigt. Für die Ermittlung der benötigten Aufwandmenge ist die Berücksichtigung der Applikationskarte und des verwendeten Fahrspursystems besonders wichtig, weil die jeweils am Ort ausgebrachte Menge an Gut sehr stark von der momentanen Position der Verteilmaschine innerhalb der Applikationskarte abhängt und je nach Fahrspursystem nur bestimmte Positionen erlaubt sind. Die Diskrepanz zwischen der tatsächlich ausgebrachten Menge an landwirtschaftlichem Gut und der idealerweise auf Grundlage der Applikationskarte zu verteilenden Menge an Gut sowie die Abhängigkeit der Teilaufwandmenge von dem verwendeten Fahrspursystem nimmt hierbei mit der Anzahl der vorhanden Teilbreiten ab, da bei zunehmend schmalen Teilbreiten verschiedene Zonen der Applikationskarte mit verschiedenen Sollausbringmengen und deren Verlauf immer besser bei der Bearbeitung nachvollzogen werden können. Demgegenüber hängt bei sehr wenigen Teilbreiten die am jeweiligen Ort ausgebrachte Menge an landwirtschaftlichem Gut sehr empfindlich von der jeweiligen Position der Verteilmaschine innerhalb der Applikationskarte und damit vom jeweiligen Fahrspursystem ab.

In einer vorteilhaften Weiterbildung der vorliegenden Erfindung ist vorgesehen, dass das Verfahren zudem den Schritt des Ausgebens und/oder Anzeigens und/oder Übertragens der ermittelten Aufwandmenge umfasst. Es ist also vorgesehen, dass das Ergebnis des Verfahrens, also die ermittelte Aufwandmenge dem Anwender angezeigt oder in der Weise übertragen wird, beispielsweise an ein Terminal oder ein Mobiltelefon des Anwenders, dass diesem die benötigte Aufwandmenge angezeigt werden kann.

In einer vorteilhaften Weiterbildung der Erfindung umfasst das Verfahren zudem den Schritt des automatisierten oder teilautomatisierten Befüllens eines Vorratsbehälters der Verteilmaschine durch Ansteuern von Ventilen und/oder Pumpen und/oder sonstigen Aktoren zum Befüllen des Vorratsbehälters entsprechend der ermittelten benötigten Aufwandmenge unter Berücksichtigung des mittels zumindest eines Füllstandssensors ermittelten aktuellen Füllstandes des Vorratsbehälters. Auf diese Weise kann die Verteilmaschine mit der ermittelten und benötigten Aufwandmenge durch direkte Ansteuerung entsprechender Bauteile an der Verteilmaschine automatisiert oder teilautomatisiert befüllt werden, was eine Entlastung des Anwenders darstellt. Dabei kann vorgesehen sein, den Vorratsbehälter mit einer etwas größeren Menge als der berechneten Aufwandmenge zu füllen, um geringe Abweichungen zwischen der berechneten Aufwandmenge und der tatsächlich notwendigen Aufwandmenge zu erlauben. Diese Abweichungen können beispielsweise durch die Schrittweite zwischen zwei Berechnungsschritten für die Teilaufwandmengen herrühren.

In einer vorteilhaften Weiterbildung der Erfindung wird das Verfahren zur Ermittlung der Aufwandmenge auf zumindest zwei gleichzeitig zu verteilende landwirtschaftliche Güter angewendet. Die Sollausbringmengen für die beiden Güter können hierbei in separaten Applikationskarten oder in einer Applikationskarte in separaten, sogenannten Layern gespeichert sein. Das gleichzeitige Ausbringen von mehreren Gütern wird durch eine zunehmende Zahl landwirtschaftlicher Verteilmaschinen unterstützt. Es können hierdurch mehrere Arbeitsvorgänge gebündelt und entsprechend Zeit und Kosten gespart werden. Beispielsweise können mittels einer Pflanzenschutzspritze verschiedene Pflanzenschutzmittel, konzentriert oder vorverdünnt, im Rahmen eines Direkteinspeisungssystems nach Bedarf in die Trägerflüssigkeit, vorzugsweise direkt an den Düsen, zudosiert werden. Alternativ oder zusätzlich kann vorgesehen sein, mit der Trägerflüssigkeit bereits ein Pflanzenschutzmittel zu verdünnen und weitere Mittel nach Bedarf, beispielsweise mittels eines Direkteinspeisungssystems, hinzuzugeben.

In einer vorteilhaften Weiterbildung der Erfindung umfasst die Ermittlung der innerhalb der Arbeitsbreite und/oder Teilbreite auszubringenden Teilaufwandmenge eine Mittelung der im Bereich der Arbeitsbreite und/oder Teilbreite in der Applikationskarte hinterlegten Sollausbringmengen. Es ist also einerseits vorgesehen, dass nur ein einzelner Datenpunkt der Applikationskarte, vorzugsweise derjenige im Zentrum der jeweiligen Arbeitsbreite und/oder Teilbreite, jeweils zur Berechnung der auszubringenden Teilaufwandmenge berücksichtigt wird. Alternativ kann eine Mittelung vorgenommen werden über die Breite der Arbeitsbreite bzw. der Teilbreite am jeweiligen Ort. Verfügt die Verteilmaschine beispielsweise nur über eine einzige Teilbreite mit der Breite der Arbeitsbreite und befinden sich 2/3 der Arbeitsbreite in einer Zone der Applikationskarte mit Sollausbringmenge A und 1/3 in einer Zone mit Sollausbringmenge B, so kann die Teilaufwandmenge beispielsweise gegeben sein durch TA= 2/3*A+1/3*B*AB*SW, mit der Arbeitsbreite AB und der Schrittweite SW.

Offenbart ist zudem eine Datenverarbeitungseinheit zur Durchführung zumindest eines der Verfahren nach Anspruch 1 bis 8 umfassend zumindest einen Prozessor und zumindest eine Speichereinheit, wobei auf der zumindest einen Speichereinheit zumindest eine Applikationskarte der zu bearbeitenden landwirtschaftlichen Fläche, ein Fahrspursystem der landwirtschaftlichen Fläche und Informationen über die Anzahl der innerhalb der Arbeitsbreite der Verteilmaschine vorhandenen Teilbreiten hinterlegt sind. Es ist also vorgesehen, mittels der erfindungsgemäßen Datenverarbeitungseinheit die auszubringende Aufwandmenge anhand der Applikationskarten, des Fahrspursystems und der Informationen hinsichtlich Arbeitsbreite und/oder Teilbreiten der Verteilmaschine zu ermitteln. Die Datenverarbeitungseinheit kann ferner dazu ausgebildet sein, die ermittelte Aufwandmenge mittels eines Bildschirms anzuzeigen und/oder zur späteren Anzeige zu speichern und/oder an andere Geräte zu übertragen. Zudem kann vorgesehen sein, dass die Datenverarbeitungseinheit ausgebildet ist, den Befüllvorgang der Verteilmaschine entsprechend der ermittelten Aufwandmenge zu steuern.

Die Erfindung umfasst zudem eine Verteilmaschine mit einer Datenverarbeitungseinheit nach Anspruch 9, umfassend zudem einen Vorratsbehälter für ein landwirtschaftliches Gut sowie Ventile und/oder Pumpen und/oder sonstige Aktoren für das Befüllen des Vorratsbehälters mit landwirtschaftlichem Gut sowie zumindest einen Sensor zur Ermittlung des Füllstandes des Vorratsbehälters. Hierbei ist insbesondere vorgesehen, dass die Datenverarbeitungseinheit ausgebildet ist, den Befüllvorgang der Verteilmaschine zur Befüllung des Vorratsbehälters entsprechend der durch die Datenverarbeitungseinheit ermittelten, benötigten Aufwandmenge an landwirtschaftlichem Gut, zu steuern.

Weitere Aspekte der vorliegenden Erfindung ergeben sich aus der Beispielsbeschreibung und den Figuren, hierbei zeigen

Fig. 1    ein Fahrspursystem einer landwirtschaftlichen Fläche,

Fig. 2    ein Fahrspursystem und Applikationskarte einer landwirtschaftlichen Fläche,

Fig. 3    eine landwirtschaftliche Verteilmaschine an verschiedenen Positionen der Applikationskarte und

Fig. 4    eine landwirtschaftliche Verteilmaschine an verschiedenen Positionen der Applikationskarte.

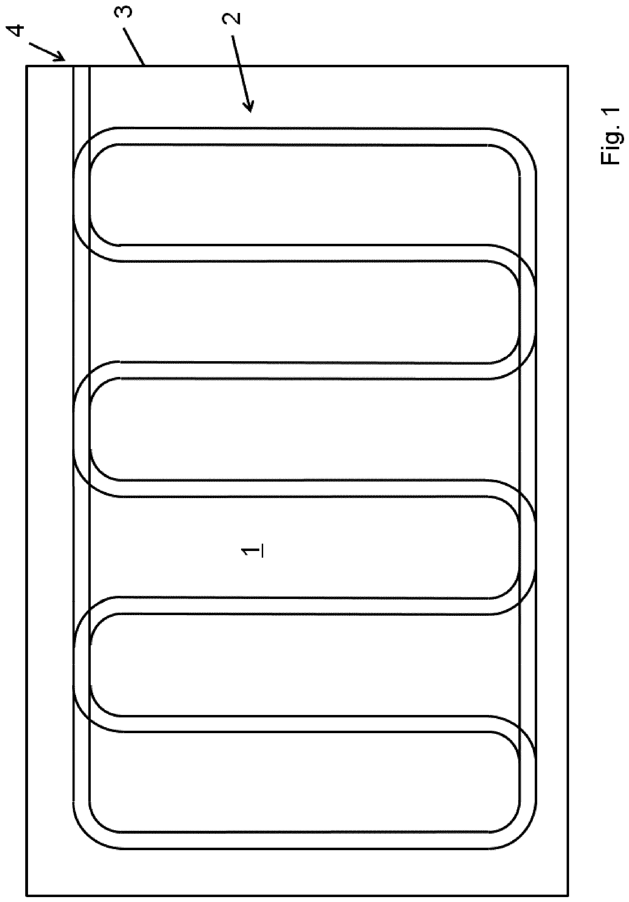

Eine landwirtschaftliche Fläche 1 mit einem Fahrspursystem 2 und Begrenzung 3 ist dargestellt in Fig. 1. Das Fahrspursystem wird in der Regel während des Sävorgangs angelegt, indem während des Sävorgangs im Bereich der Fahrspuren kein Saatgut ausgebracht wird und dient der späteren Bearbeitung der landwirtschaftlichen Fläche mit Pflanzenschutzspritzen und Schleuderstreuern, wenn die Pflanzen bereits aufgewachsen sind. Zur Bearbeitung kann mit der Verteilmaschine im Bereich 4 in die Fläche entlang der Fahrspur hineingefahren werden. Anschließend kann wahlweise durch Hin- und Herfahren zunächst der Innenbereich der landwirtschaftlichen Fläche bearbeitet oder mittels einer Umrundung der Fläche der Vorgewendebereich bearbeitet werden. Letzteres wird oftmals zuerst durchgeführt, da auf diese Weise die Kontur der landwirtschaftlichen Fläche mittels eines GPS-Systems der Verteilmaschine erfassbar ist.

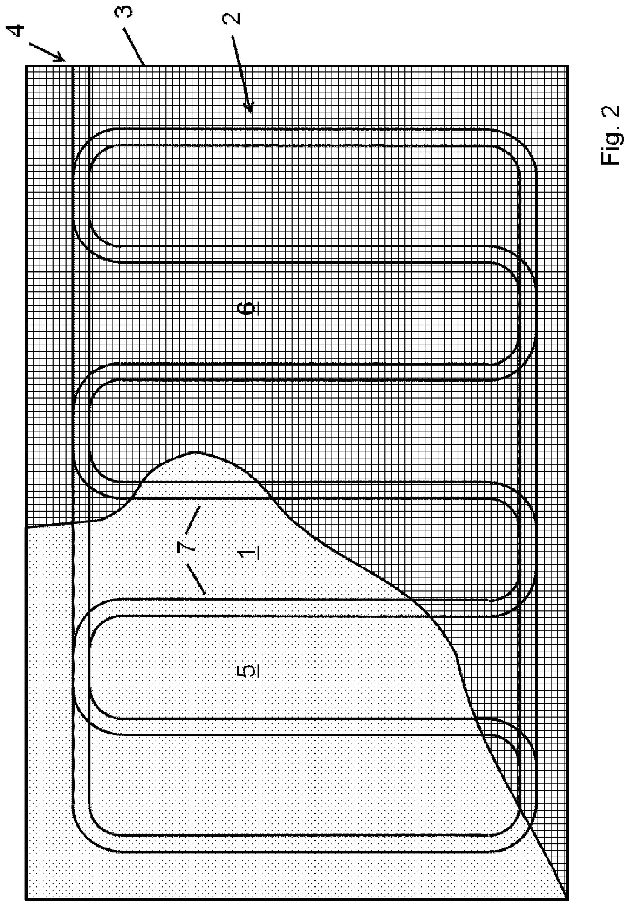

Eine Applikationskarte für die landwirtschaftliche Fläche 1 ist in Fig. 2 dargestellt. Diese zeigt zusätzlich zu der in Fig. 1 dargestellten Begrenzung 3 und dem Fahrspursystem 2 zwei Bereiche 5, 6 mit unterschiedlichen Sollausbringmengen. Eine derartige Applikationskarte kann auf einem Jobrechner oder Terminal oder sonstigen Datenverarbeitungseinheit zusammen mit der Begrenzung der landwirtschaftlichen Fläche und/oder dem Fahrspursystem 2 als Einheit gespeichert sein. Die Datensätze hierfür können aber auch getrennt im Speicher der Datenverarbeitungseinheit hinterlegt sein. Die in den zwei Bereichen auszubringenden Sollmengen, angegeben in Menge an landwirtschaftlichem Gut pro Fläche, werden typischerweise in Datenpunkten der landwirtschaftlichen Fläche mit festem Abstand, beispielsweise alle 10m hinterlegt. So kann beispielsweise eine Matrix oder ein sonstiger Datensatz aufgebaut werden, in welchem in festgelegten Abständen die jeweils auszubringenden Sollmengen hinterlegt sind. Für die in Fig. 2 dargestellte Applikationskarte würde entsprechend für den Bereich 5 eine erste Sollmenge A und für den Bereich 6 eine zweite Sollmenge B in dem Datensatz hinterlegt.

Das erfindungsgemäße Verfahren wird nun in einer Datenverarbeitungseinheit durchgeführt. Hierfür sind in dieser zusätzlich zu den Informationen der Applikationskarte und dem Fahrspursystem zudem zumindest Daten bezüglich der Arbeitsbreite der Verteilmaschine hinterlegt. Ist diese Information nicht vorhanden, kann vorgesehen sein, durch die Datenverarbeitungseinheit als Arbeitsbreite der Abstand zweier Fahrspuren im Zentrum der landwirtschaftlichen Fläche, beispielsweise der Fahrspuren 7 als Arbeitsbreite anzunehmen. Zusätzlich ist in dem Datenverarbeitungssystem die Anzahl der Teilbreiten hinterlegt. Es kann vorgesehen sein, bei Nichtvorliegen dieser Information als Anzahl der Teilbreiten 1 anzunehmen. In diesem Fall ist die Ausbringmenge für alle Ausbringorgane der Verteilmaschine abgesehen von einer zusätzlich möglichen Abschaltbarkeit einzelner Ausbringorgane immer identisch. Bei mehr als einer Teilbreite ist vorgesehen, dass die Positionen der Teilbreiten in der Datenverarbeitungseinheit hinterlegt sind. Die Breite der Teilbreiten entspricht dann jeweils der Summe der Hälfte der Abstände zu den Positionen der benachbarten Teilbreiten. Liegt diese Information nicht vor, kann alternativ vorgesehen sein, dass die Breite jeder Teilbreite der Arbeitsbreite dividiert durch die Anzahl der Teilbreiten entspricht, alle Teilbreiten somit also dieselbe Breite aufweisen. Hieraus ergibt sich dann entsprechend die Lage jeder Teilbreite innerhalb der Arbeitsbreite. Die Position jeder Teilbreite entspricht in diesem Fall dem Zentrum der jeweiligen Teilbreite. Es ist zudem vorgesehen, dass die Position eines Fahrwerks relativ zur Arbeitsbreite bzw. der Position der Teilbreiten in der Datenverarbeitungseinheit hinterlegt ist. Liegt diese Information nicht vor, kann alternativ durch die Datenverarbeitungseinheit angenommen werden, dass die Arbeitsbreite symmetrisch zur Position des Fahrwerks angeordnet ist.

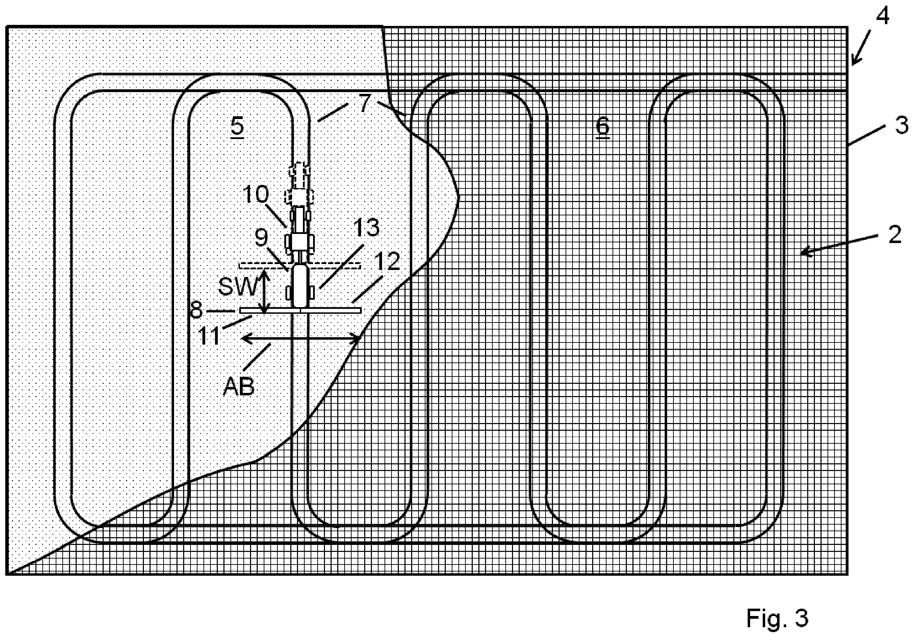

Unter Berücksichtigung der obigen Informationen kann nun die benötigte Aufwandmenge für die Bearbeitung der landwirtschaftlichen Fläche wie in Fig. 3 dargestellt simuliert werden. Hierfür wird ein Modell der Verteilmaschine entlang des Fahrspursystems 2 bewegt. Ein derartiges Modell kann beispielsweise die Arbeitsbreite AB der Verteilmaschine und/oder deren Teilbreiten umfassen. Dies ist in Fig. 3 dargestellt durch einen zweigeteilten Spritzbalken 8 einer Feldspritze 9, angehängt an einen Schlepper 10. Der zweigeteilte Spritzbalken umfasst zwei Teilbreiten 11, 12, wobei der Ort der Teilbreiten dem Zentrum der jeweiligen Teilbreite entspricht. Das obige System ist durch das Fahrspursystem, die Applikationskarte, die Begrenzung der landwirtschaftlichen Fläche und die Angabe über die Anzahl der Teilbreiten ausreichend charakterisiert. In diesem Fall würde als Arbeitsbreite der Fahrspurabstand zweier Fahrspuren im Zentrum der landwirtschaftlichen Fläche, also beispielsweise der Fahrspuren 7 angenommen und dass die Arbeitsbreite und die beiden Teilbreiten symmetrisch zum Fahrwerk 13 der Feldspritze 9 angeordnet sind. Alternativ kann die Position der Teilbreiten 11, 12 relativ zu dem Fahrwerk 13 und/oder eine abweichende Arbeitsbreite in dem Datenverarbeitungssystem hinterlegt sein.

Zur Ermittlung der Teilaufwandmenge am Ort der Feldspritze 9 bzw. des Spritzbalkens 8 wird nun am Ort der Teilbreiten 11, 12 die Sollausbringmenge in Menge an landwirtschaftlichem Gut pro Fläche aus der Applikationskarte ermittelt und diese entsprechend der Breite jeder Teilbreite und der Schrittweite in eine Teilaufwandmenge, welche die Menge des für diesen Bereich aufzuwendenden Guts angibt, umgerechnet. Die Schrittweite SW gibt hierbei den Abstand an in denen zwei aufeinanderfolgende Berechnungsschritte durchgeführt werden. Dies kann eine Streckenangabe oder eine Zeit umfassen, wenn das Modell der Verteilmaschine mit einer festgelegten Geschwindigkeit bewegt wird. Die Schrittweite SW ist in Fig. 3 beispielsweise gegeben durch den Abstand der Modelle bei zwei aufeinanderfolgenden Berechnungsschritten, wobei das Modell im nachfolgenden Berechnungsschritt gestrichelt dargestellt ist.

Unter der Annahme, dass die Sollausbringmenge in Fig. 3 im Bereich 5 der landwirtschaftlichen Fläche 200 l/ha beträgt, die Arbeitsbreite 24 m ist und die SW 10 m ergibt sich für den dargestellten Berechnungsschritt eine Teilaufwandmenge TA von

$$TA= 24m*10m*1/10000 *(1/2*200l/ha+1/2*200l/ha)= 4,8l$$

Die beiden Arbeitsbreiten 11, 12 befinden sich hierbei vollständig im Bereich 5.

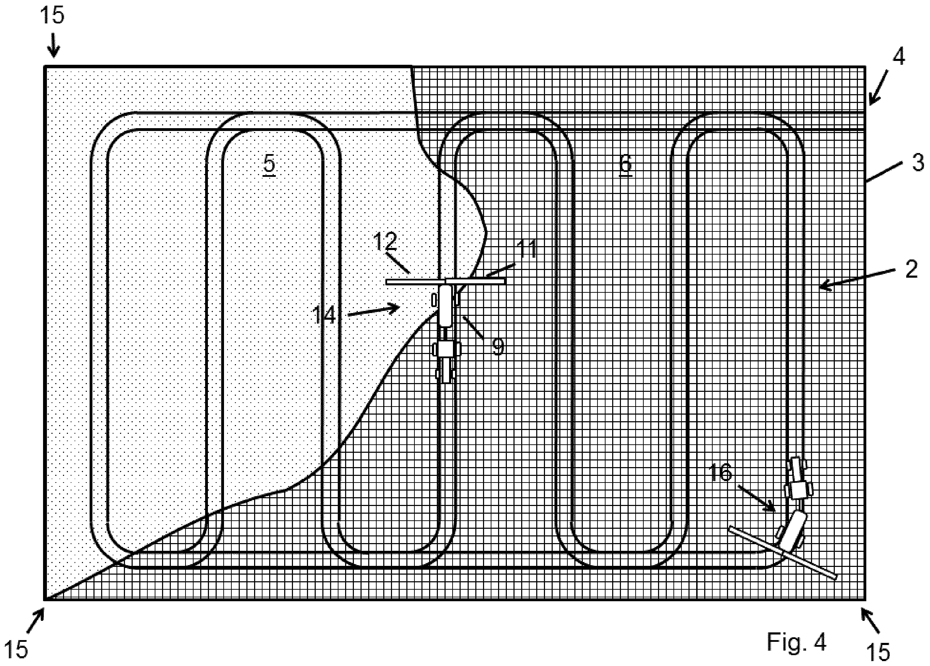

In Fig. 4 ist ein zweiter Berechnungsschritt dargestellt. In diesem Fall befindet sich das Modell der Feldspritze 9 an einer zweiten Position 14 auf der benachbarten Fahrspur. Hierbei befindet sich das Zentrum der Teilbreite 12 im Bereich 5 während das Zentrum der Teilbreite 11 sich im Bereich 6 befindet und somit mit einer von der Teilbreite 12 verschiedenen Sollausbringmenge zu beaufschlagen ist. Ist für den Bereich 6 eine Sollausbringmenge von 300l/ha vorgesehen, so ergibt sich für diesen Berechnungsschritt eine Teilaufwandmenge für die beiden Teilbreiten von

$$TA= 24m*10m*1/10000 *(1/2*200l/ha+1/2*300l/ha)= 6,0l$$

Im vorliegenden Beispiel wird für die jeweilige Teilbreite die Ausbringmenge angenommen, die laut Applikationskarte im Zentrum der Teilbreite vorliegt. Unmittelbar ersichtlich ist aus dieser Position 14 die Abhängigkeit der Berechnung von der Position des Fahrspursystems auf der landwirtschaftlichen Fläche. Würde sich die virtuell befahrene Fahrspur einige Meter weiter links befinden, beziehungsweise in Fahrtrichtung der Verteilmaschine rechts, so müsste für die gesamte Teilbreite 11 an dieser Position die Sollausbringmenge des Bereichs 5 angenommen werden, da sich in diesem Fall das Zentrum der Teilbreite 11 im Bereich 5 befände. Es kann alternativ vorgesehen sein die Sollausbringmenge über die Breite der jeweiligen Teilbreite zu mitteln. Dies würde für den zweiten Berechnungsschritt für die Teilbreite 11 eine niedrigere Teilaufwandmenge bedeuten, da diese Teilbreite sich teilweise im Bereich 5 und teilweise im Bereich 6 befindet.

Zur Berechnung der insgesamt benötigten Aufwandmenge wird nun das Modell schrittweise über die landwirtschaftliche Fläche 1 bewegt und bei jedem Schritt die jeweilige Teilaufwandmenge ermittelt, bis die Fläche zumindest annähernd vollständig virtuell bearbeitet ist. In den Randbereichen, insbesondere bei der Bearbeitung des Vorgewendes kann es hierbei in Abhängigkeit des Abstands der Fahrspur von der Feldgrenze notwendig sein, die Arbeitsbreite und/oder die Breite einzelner Teilbreiten geringer zu wählen oder auch einzelne Teilbreiten für die Berechnung vollständig unberücksichtigt zu lassen, wenn diese über die Feldgrenze hinausragen oder in einen Bereich in der Nähe der Feldgrenze hineinragen, welcher nicht bearbeitet werden darf.

Anschließend wird die Summe der ermittelten Teilaufwandmengen berechnet, was der insgesamt benötigten Aufwandmenge entspricht. Die landwirtschaftliche Fläche zumindest annähernd vollständig virtuell zu bearbeiten meint in diesem Zusammenhang, dass Bereiche der landwirtschaftlichen Fläche 1 unter Umständen aufgrund der Form der landwirtschaftlichen Fläche, der Anordnung der Fahrspuren oder der Anordnung der Teilbreiten an der Verteilmaschine nicht bearbeitbar sind. So können bei einer Bewegung der Verteilmaschine entlang des Fahrspursystems der in den Figuren dargestellten Fläche die Eckbereiche 15 nicht oder nur sehr umständlich bearbeitet werden, wie aus der Position des Modells 16 unmittelbar ersichtlich. Je kleiner die Schrittweite bei der Berechnung gewählt wird, je exakter entspricht die ermittelte Aufwandmenge der letztlich beim tatsächlichen Bearbeitungsvorgang benötigten, wobei bei einer geringeren Schrittweite und damit größeren Anzahl an Berechnungsschritten die benötigte Rechenleistung entsprechend zunimmt.

Die Berechnung der Teilaufwandmengen und der hieraus ermittelten Aufwandmenge für die gesamte Fläche kann durch eine Datenverarbeitungseinheit durchgeführt werden, welche sich an der Verteilmaschine oder dem die Verteilmaschine ziehenden oder tragenden Schlepper befindet. Es kann sich hierbei beispielsweise um ein Terminal oder einen Jobrechner handeln. Die Aufwandmenge kann dem Anwender auf einem Bildschirm der Datenverarbeitungseinheit angezeigt werden. Insbesondere ist vorgesehen, dass die Datenverarbeitungseinheit Pumpen, Ventile oder sonstige Aktoren derart steuert, dass ein Vorratsbehälter der Verteilmaschine entsprechend der ermittelten Aufwandmenge befüllt wird. Hierbei kann beispielsweise vorgesehen sein, dass die Aufwandmenge immer etwas größer gewählt wird, als die ermittelte Aufwandmenge, um kleinere Abweichungen zwischen theoretisch ermittelter und tatsächlich benötigter Aufwandmenge zu erlauben. Diese können beispielsweise wegen der endlichen Schrittweite zwischen den Berechnungsschritten auftreten.

Das vorliegende Verfahren ist auf jegliche Art landwirtschaftlicher Verteilmaschine, insbesondere Feldspritzen, Schleuderstreuer und Sämaschinen in gleicher Weise anwendbar.

**Patentansprüche**

1. Verfahren zur Ermittlung der benötigten Aufwandmenge eines landwirtschaftlichen Guts für die Bearbeitung einer landwirtschaftlichen Fläche (1) oder Teilfläche mit einer landwirtschaftlichen Verteilmaschine unter Verwendung eines Fahrspursystems (2) und einer Applikationskarte für die landwirtschaftliche Fläche (1) oder Teilfläche und Informationen über die Anzahl und Position der innerhalb der Arbeitsbreite (AB) der Verteilmaschine vorhandenen Teilbreiten (11,12) mittels virtueller Bearbeitung, umfassend die Schritte:

   - Erstellen eines virtuellen Modells der Verteilmaschine mit einer Anzahl an Teilbreiten (11, 12), wobei das Modell die Position der Teilbreiten innerhalb der Arbeitsbreite (AB) umfasst;
   - Bewegen des virtuellen Modells der Verteilmaschine entlang des Fahrspursystems (2) auf einem Modell der landwirtschaftlichen Fläche oder Teilfläche,
   - In festgelegter Schrittweite (SW) wiederholtes Berechnen der Teilaufwandmenge (TA), welche zur Erreichung der sich aus der Applikationskarte am jeweiligen Ort des Modells der Verteilmaschine und/oder deren Teilbreiten (11,12) ergebenden Sollausbringmenge benötigt wird, und
   - Aufsummieren der Teilaufwandmengen (TA) zur Ermittlung der benötigten Aufwandmenge bis die landwirtschaftliche Fläche (1) zumindest annähernd vollständig virtuell bearbeitet wurde.

2. Verfahren nach Anspruch 1, **dadurch gekennzeichnet, dass** das Verfahren durchgeführt wird unter Verwendung der Information des relativen Ortes benachbarter Teilbreiten zueinander und/oder zur landwirtschaftlichen Verteilmaschine, insbesondere deren Fahrwerk.

3. Verfahren nach Anspruch 1 oder 2, **dadurch gekennzeichnet, dass** die festgelegte Schrittweite (SW) eine zwischen zwei Berechnungen durch das virtuelle Modell der Verteilmaschine zurückzulegende Strecke entlang des Fahrspursystems (2) und/oder eine zwischen zwei Berechnungen abzuwartende Zeit bei einer festgelegten Geschwindigkeit des virtuellen Modells der Verteilmaschine entlang des Fahrspursystems (2) berücksichtigt.

4. Verfahren nach zumindest einem der Ansprüche 1 bis 3, **dadurch gekennzeichnet, dass** das Verfahren durchgeführt wird unter Verwendung der Information über die Arbeitsbreite (AB), insbesondere eine vom Fahrspurabstand abweichende Arbeitsbreite, der landwirtschaftlichen Verteilmaschine.

5. Verfahren nach zumindest einem der Ansprüche 1 bis 4, **dadurch gekennzeichnet, dass** das Verfahren zudem den Schritt des Ausgebens und/oder Anzeigens und/oder Übertragens der ermittelten Aufwandmenge umfasst.

6. Verfahren nach zumindest einem der Ansprüche 1 bis 5, umfassend zudem den Schritt des automatisierten oder teilautomatisierten Befüllens eines Vorratsbehälters der Verteilmaschine durch Ansteuern von Ventilen und/oder Pumpen und/oder sonstigen Aktoren zum Befüllen des Vorratsbehälters entsprechend der ermittelten benötigten Aufwandmenge unter Berücksichtigung des mittels zumindest eines Füllstandssensors ermittelten aktuellen Füllstandes des Vorratsbehälters.

7. Verfahren nach zumindest einem der Ansprüche 1 bis 6, wobei das Verfahren zur Ermittlung der Aufwandmenge auf zumindest zwei gleichzeitig zu verteilende landwirtschaftliche Güter angewendet wird.

8. Verfahren nach zumindest einem der Ansprüche 1 bis 7, wobei die Ermittlung der innerhalb der Arbeitsbreite (AB) und/oder Teilbreite (11,12) auszubringenden Teilaufwandmenge (TA) eine Mittelung der im Bereich der Arbeitsbreite und/oder Teilbreite in der Applikationskarte hinterlegten Sollausbringmengen umfasst.

9. Datenverarbeitungseinheit umfassend zumindest einen Prozessor und zumindest eine Speichereinheit, wobei auf der zumindest einen Speichereinheit zumindest eine Applikationskarte der zu bearbeitenden landwirtschaftlichen Fläche, ein Fahrspursystem der landwirtschaftlichen Fläche und Informationen über die Anzahl der innerhalb der Arbeitsbreite der Verteilmaschine vorhandenen Teilbreiten hinterlegt sind,
**dadurch gekennzeichnet, dass** die Datenverarbeitungseinheit zur Durchführung zumindest eines der Verfahren nach Anspruch 1 bis 8 ausgebildet ist.

10. Landwirtschaftliche Verteilmaschine mit einem Vorratsbehälter für ein landwirtschaftliches Gut sowie Ventilen und/oder Pumpen und/oder sonstigen Aktoren für das Befüllen des Vorratsbehälters mit landwirtschaftlichem Gut sowie zumindest einem Sensor zur Ermittlung des Füllstandes des Vorratsbehälters,
**dadurch gekennzeichnet, dass** die Verteilmaschine eine Datenverarbeitungseinheit nach Anspruch 9 umfasst.

11. Landwirtschaftliche Verteilmaschine nach Anspruch 10, **dadurch gekennzeichnet, dass** die Verteilmaschine über zumindest zwei Behälter zum Bevorraten von zwei verschiedenen landwirtschaftlichen Gütern, insbesondere konzentriertem und/oder verdünntem Pflanzenschutzmittel, verfügt und ausgebildet ist zumindest zwei verschiedene landwirtschaftliche Güter auf der landwirtschaftlichen Fläche zeitgleich und vorzugsweise mit voneinander unabhängigen Ausbringraten auszubringen.

**Claims**

1. Method for determining the required application rate of agricultural material for working an agricultural area (1) or partial area with an agricultural spreader by using a wheel track system (2) and an application map for the agricultural area (1) or partial area and information about the number and position of the partial widths (11, 12) that exist within the working width (AB) of the spreader by means of virtual working, comprising the steps of:

- creating a virtual model of the spreader with a number of partial widths (11, 12), the model comprising the position of the partial widths within the working width (AB);
- moving the virtual model of the spreader along the wheel track system (2) on a model of the agricultural area or partial area,
- repeatedly calculating at fixed increments (SW) the partial application rate (TA) that is required to achieve the target application rate obtained from the application map at the respective location of the model of the spreader and/or the partial widths (11, 12) thereof, and

- adding together the partial application rates (TA) to determine the required application rate until the agricultural area (1) has been at least almost completely virtually worked.

2. Method according to Claim 1, **characterized in that** the method is carried out by using the information of the relative location of neighbouring partial widths in relation to one another and/or in relation to the agricultural spreader, in particular the chassis thereof.

3. Method according to Claim 1 or 2, **characterized in that** the fixed increment (SW) takes into account a distance along the wheel track system (2) that is covered between two calculations by the virtual model of the spreader and/or a time that is to be allowed to pass between two calculations when there is a fixed speed of the virtual model of the spreader along the wheel track system (2).

4. Method according to at least one of Claims 1 to 3, **characterized in that** the method is carried out by using the information about the working width (AB), in particular a working width deviating from the wheel track spacing, of the agricultural spreader.

5. Method according to at least one of Claims 1 to 4, **characterized in that** the method also comprises the step of outputting and/or displaying and/or transmitting the application rate determined.

6. Method according to at least one of Claims 1 to 5, also comprising the step of automated or partially automated filling of a storage container of the spreader by activating valves and/or pumps and/or other actuators for filling the storage container in accordance with the determined required application rate while taking into account the current filling level of the storage container determined by means of at least one filling level sensor.

7. Method according to at least one of Claims 1 to 6, the method for determining the application rate being used for at least two agricultural materials to be spread at the same time.

8. Method according to at least one of Claims 1 to 7, the determination of the partial application rate (TA) to be applied within the working width (AB) and/or partial width (11, 12) comprising an averaging of the target application rates in the region of the working width and/or partial width stored in the application map.

9. Data processing unit comprising at least one processor and at least one memory unit, with at least one application map of the agricultural area to be worked, a wheel track system of the agricultural area and information about the number of partial widths that exist within the working width of the spreader being stored on the at least one memory unit, **characterized in that** the data processing unit is designed for carrying out at least one of the methods according to Claims 1 to 8.

10. Agricultural spreader having a storage container for agricultural material and valves and/or pumps and/or other actuators for filling the storage container with agricultural material and at least one sensor for determining the filling level of the storage container,
**characterized in that** the spreader comprises a data processing unit according to Claim 9.

11. Agricultural spreader according to Claim 10, **characterized in that** the spreader has at least two containers for storing two different agricultural materials, in particular concentrated and/or diluted crop protection agents, and is designed to apply at least two different agricultural agents to the agricultural area at the same time and preferably at application rates that are independent of one another.

## Revendications

1. Procédé de détermination de la quantité d'application requise d'un produit agricole pour traiter une surface agricole (1), ou partie de surface, avec une machine d'épandage agricole à l'aide d'un système de voies de roulement (2) et d'une carte d'application destinée à la surface agricole (1), ou partie de surface, et d'informations sur le nombre et la position des parties de largeur (11, 12), présentes dans la largeur de travail (AB) de la machine d'épandage, au moyen d'un traitement virtuel, ledit procédé comprenant les étapes suivantes :

- créer un modèle virtuel de la machine d'épandage qui est pourvu d'un certain nombre de parties de largeur (11, 12), le modèle comprenant la position des parties de largeur à l'intérieur de la largeur de travail (AB) ;
- déplacer le modèle virtuel de la machine d'épandage le long du système de voies de roulement (2) sur un modèle de la surface agricole ou partie de surface,
- calculer, de manière répétée avec un incrément (SW) spécifié, la quantité d'application partielle (TA) qui est nécessaire pour atteindre la quantité d'application cible résultant de la carte d'application à l'emplacement respectif du modèle de machine d'épandage et/ou de parties de largeur (11, 12) de celle-ci, et
- additionner les quantités d'application partielles (TA) pour déterminer la quantité d'application requise jusqu'à ce que la surface agricole (1) ait été au moins approximativement complètement traitée virtuellement.

2. Procédé selon la revendication 1, **caractérisé en ce que** le procédé est mis en œuvre à l'aide de l'information de l'emplacement relatif de parties de largeur adjacentes les unes par rapport aux autres et/ou par rapport à la machine d'épandage agricole, notamment le mécanisme de roulement de celle-ci.

3. Procédé selon la revendication 1 ou 2, **caractérisé en ce que** l'incrément (SW) spécifié prend en compte une distance à parcourir entre deux calculs effectués par le modèle virtuel de la machine d'épandage le long du système de voies de roulement (2) et/ou un temps attendu entre deux calculs à une vitesse spécifiée du modèle virtuel de la machine d'épandage le long du système de voies de roulement (2).

4. Procédé selon l'une au moins des revendications 1 à 3, **caractérisé en ce que** le procédé est mis en œuvre à l'aide de l'information sur la largeur de travail (AB), notamment une largeur de travail de la machine d'épandage agricole qui diffère de l'écartement de voies de roulement.

5. Procédé selon l'une au moins des revendications 1 à 4, **caractérisé en ce que** le procédé comprend également l'étape de délivrance et/ou d'affichage et/ou de transmission de la quantité d'application déterminée.

6. Procédé selon l'une au moins des revendications 1 à 5, comprenant en outre l'étape de remplissage automatisé ou semi-automatisé d'un réservoir de la machine d'épandage par commande de vannes et/ou de pompes et/ou d'autres actionneurs de remplissage du réservoir selon la quantité d'application requise déterminée avec prise en compte du niveau de remplissage actuel du réservoir déterminé au moyen d'au moins un capteur de niveau de remplissage.

7. Procédé selon l'une au moins des revendications 1 à 6, le procédé de détermination de la quantité d'application étant appliqué à au moins deux produits agricoles à épandre simultanément.

8. Procédé selon l'une au moins des revendications 1 à 7, la détermination de la quantité d'application partielle (TA) à appliquer à l'intérieur de la largeur de travail (AB) et/ou partie de largeur (11, 12), comprenant la moyenne des quantités d'application cibles stockées dans la carte d'application dans la zone de la largeur de travail et/ou partie de largeur.

9. Unité de traitement de données comprenant au moins un processeur et au moins une unité de mémorisation, au moins une carte d'application de la surface agricole à traiter, un système de voies de roulement de la surface agricole et des informations sur le nombre de parties de largeur présentes à l'intérieur de la largeur de travail de la machine d'épandage étant stockés dans l'au moins une unité de mémorisation, **caractérisée en ce que** l'unité de traitement de données est conçue pour mettre en œuvre l'un au moins des procédés selon les revendications 1 à 8.

10. Machine d'épandage agricole comprenant un réservoir de produits agricoles ainsi que des vannes et/ou des pompes et/ou d'autres actionneurs pour remplir le réservoir avec des produits agricoles et au moins un capteur pour déterminer le niveau de remplissage du réservoir, **caractérisée en ce que** la machine d'épandage comprend une unité de traitement de données selon la revendication 9.

11. Machine d'épandage agricole selon la revendication 10, **caractérisée en ce que** la machine d'épandage comporte au moins deux réservoirs de stockage de deux produits agricoles différents, notamment des produits phytosanitaires concentrés et/ou dilués, et est conçue pour épandre au moins deux produits agricoles différents sur la surface agricole en même temps et de préférence avec des taux d'épandage indépendants.

Fig. 1

Fig. 2

EP 3 403 496 B1

Fig. 3

EP 3 403 496 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055217 A1
- FR 2882498 A1
- EP 2057877 B1
- EP 2921050 A1